# EUROPÄISCHE PATENTSCHRIFT

(11) **EP 4 664 011 B1**
(45) Veröffentlichungstag und Bekanntmachung des Hinweises auf die Patenterteilung: **25.11.2026**
(21) Anmeldenummer: 25181869.6
(22) Anmeldetag: 10.06.2025
(51) Int. Cl.: F23R 3/14, F23R 3/36

(54) **INJEKTORANORDNUNG FÜR EIN TRIEBWERK UND FLUGZEUG**
INJECTOR ASSEMBLY FOR AN ENGINE AND AIRCRAFT
ENSEMBLE INJECTEUR POUR MOTEUR ET AÉRONEF

(30) Priorität: 13.06.2024 DE 102024205468
(43) Veröffentlichungstag der Anmeldung: 17.12.2025
(73) Patentinhaber: Rolls-Royce Deutschland Ltd & Co KG, 15827 Blankenfelde-Mahlow (DE)
(72) Erfinder: EGGELS, Ruud, 15827 Blankenfelde-Mahlow (DE)

(56) Entgegenhaltungen:
- DE-A1- 102022 202 935
- US-A1- 2010 050 644
- US-A1- 2020 003 421
- US-A1- 20240 044 293

## Beschreibung

Die Erfindung betrifft eine Injektoranordnung für ein Triebwerk, insbesondere eines Flugzeugs, zum Einbringen eines gasförmigen Kraftstoffes und eines Flüssigkraftstoffes sowie Luft in eine Brennkammer nach dem Oberbegriff des Anspruchs 1. Die Erfindung betrifft ferner ein Flugzeug mit einer Injektoranordnung und einer Treibstoffperipherie.

Eine Injektoranordnung, oder auch Düsenbaugruppe, der eingangs genannten Art ist beispielsweise in der DE 10 2022 201 182 A1 angegeben. Dabei ist eine Kraftstoffeindüsung für den gasförmigen Kraftstoff radial außen um einen zentralen, auf einer Düsenlängsachse angeordneten Luftkanal, eine Flüssigkraftstoffeindüsung und einen zweiten Luftkanal angeordnet.

Die US 2024/0044293 A1, die US 10 794 596 B3, die US 2016/0201897 A1 und die US 11 525 403 B2 zeigen jeweils eine Injektoranordnung zum Einbringen eines gasförmigen Kraftstoffes und eines Flüssigkraftstoffes mit einem zentralen Luftkanal in unterschiedlichen Ausbildungen.

Die US 6 123 273 zeigt einen Brennstoffinjektor für eine Gasturbine zur Zugabe eines flüssigen Brennstoffes und eines gasförmigen Brennstoffes in eine Brennkammer, wobei eine Zufuhranordnung für gasförmigen Kraftstoff radial außen um eine zentrale Zufuhranordnung für Flüssigkraftstoff angeordnet ist.

Die US 10 054 093 B2 zeigt einen Brennstoffinjektor für eine Gasturbine zur Zugabe eines flüssigen Brennstoffes in eine Brennkammer.

Die US 2024/0044293 A1 zeigt eine Injektoranordnung zum Einbringen eines gasförmigen Kraftstoffes und eines Flüssigkraftstoffes. Dabei weist eine Düsenanordnung eine zentrale, innere Luftpassage, eine um die innere Luftpassage angeordnete erste Kraftstoffpassage zur Leitung des ersten Fluids (z. B. Flüssigkraftstoff), eine um die erste Kraftstoffpassage angeordnete äußere Luftpassage und eine um die äußere Luftpassage angeordnete zweite Fluidpassage auf. Das zweite Fluid, z. B. Wasserstoff, wird mittels Öffnungen in die äußere Luftpassage stromab von Drallelementen eingemischt. Umlaufend um die zweite Fluidpassage ist eine Drallanordnung angeordnet, mittels welcher Kühlluft über einen Auslass der Düsenanordnung geführt wird.

Die DE 10 2022 202 935 A1 zeigt eine Düsenbaugruppe mit drallfreier Luft- und Wasserstoffeindüsung für eine Brennkammer eines Triebwerks, mit wenigstens einer Düse zum Eindüsen von Wasserstoff in einen Brennraum der Brennkammer.

Die US 2020 / 003421 A1 zeigt einen Brennstoffinjektor, bei dem eine Brennstoffzufuhr eine Filmlegerfläche mit Öffnungen und einer Filmlegerlippe aufweist, welche angrenzend an einen zentralen Luftkanal angeordnet sind, zur Zugabe des Kraftstoffes in den zentralen Luftkanal.

Die US 2020 / 0 034 21 A1 zeigt einen Kraftstoffinjektor in Ausbildung als Dual-Fuel-Injektor zur Einbringung von gasförmigem Kraftstoff, beispielsweise Erdgas oder Propan, und flüssigem Kraftstoff.

Der Erfindung liegt die Aufgabe zugrunde, eine Injektoranordnung der eingangs genannten Art sowie ein Flugzeug mit einer vorteilhaften Emissionscharakteristik bereitzustellen.

Die Aufgabe wird für die Injektoranordnung mit den Merkmalen des Anspruchs 1 und für das Flugzeug mit den Merkmalen des Anspruchs 14 gelöst.

Bezüglich der Injektoranordnung ist vorgesehen, dass der äußere Luftkanal an seinem stromabseitigen Ende einen radial nach außen ausgerichteten Endabschnitt zur Leitung des in die Brennkammer einströmenden äußeren Luftstromes radial nach außen aufweist.

Durch den Richtungsimpuls nach außen, vorzugsweise z. B. im Wesentlichen parallel zu einer ebenfalls zugeführten Strömung an gasförmigem Kraftstoff, kann das Mischen der Luftströmung mit dem gasförmigen Kraftstoff verzögert werden, wodurch die Flammenzone weiter von dem Injektorhauptkörper beabstandet und somit die thermische Belastung des Injektors reduziert wird.

Vorzugsweise ist dabei der äußere Luftkanal ringförmig umlaufend um die Injektor-längsachse ausgebildet.

Besonders bevorzugt weist die Gaskraftstoffzufuhr an ihrem stromabseitigen Ende einen radial nach außen ausgerichteten Endabschnitt zur Leitung des in die Brennkammer einströmenden Gases radial nach außen auf.

Vorzugsweise ist der äußere Luftkanal zur Zufuhr des äußeren Luftstroms in die Brennkammer mit hoher Geschwindigkeit, zwischen 50 m/s und 150 m/s, insbesondere zwischen 80 m/s und 100 m/s, ausgebildet und/oder ist die Gaskraftstoffzufuhr zur Zufuhr des gasförmigen Kraftstoffes in die Brennkammer mit hoher Geschwindigkeit, zwischen 50 m/s und 150 m/s, insbesondere zwischen 80 m/s und 100 m/s, ausgebildet. Dabei sind insbesondere die Strömungsquerschnitte unter Berücksichtigung der Betriebszustände, für welche die Injektoranordnung ausgelegt ist, entsprechend angepasst. Auf diese Weise kann die Verbrennungszone im Betrieb mit dem hochreaktiven gasförmigen Kraftstoff von der Injektoranordnung stromab verlagert und somit die thermische Belastung der Injektoranordnung verringert werden. Erfindungsgemäß sind zwischen dem zentralen Luftkanal und dem äußeren Luftkanal ausschließlich der Gaskraftstoffkanal und der Flüssigkraftstoffkanal als Fluidkanäle angeordnet, wobei vorzugsweise ausschließlich die beiden Luftkanäle, der zentrale Luftkanal und der äußere Luftkanal, vorhanden sind.

Für ein möglichst homogenes Strömungsbild zugunsten einer schadstoffarmen Verbrennung ist/sind die Austrittsöffnung der Gaskraftstoffzufuhr und/oder die Austrittsöffnung der Flüssigkraftstoffzufuhr vorzugsweise ringförmig umlaufend ausgebildet. Fertigungstechnische Vorteile sind erreichbar, wenn eine den Gaskraftstoffkanal auf der radialen Innenseite begrenzende Wandung axial zurückversetzt gegenüber einer den Gaskraftstoffkanal auf der radialen Außenseite begrenzenden Wandung endet. Die auf der radialen Außenseite angeordnete Wandung ist vorzugsweise als (möglichst dünnwandiges) Leitelement zwischen dem Gaskraftstoffkanal und dem äußeren Luftkanal ausgebildet. Durch den Impuls der axial-radial strömenden Luftströ-mung, in welche der aus der Austrittsöffnung austretende gasförmige Kraftstoff eingebracht wird, wird die Gasströmung ebenfalls axial-radial nach außen gelenkt.

Für eine vorteilhafte, möglichst gleichmäßige Einbringung des Flüssigkraftstoffes in die Luftströmung weist vorzugsweise der Flüssigkraftstoffkanal an seinem stromabseitigen Ende eine Zerstäuberanordnung mit der Austrittsöffnung und einer Filmlegerfläche auf. An dem stromabseitigen Ende der Filmlegerfläche ist vorzugsweise eine Abströmkante angeordnet.

In einer bevorzugten Ausbildungsvariante mündet der zentrale Luftkanal an einer ersten axialen Position an einem stromabseitigen Öffnungsbereich des Injektorhauptkörpers, wobei sich der Öffnungsbereich von der ersten axialen Position vorzugsweise bis an ein stromabseitiges Ende des Injektorhauptkörpers an einer dritten axialen Position erstreckt, und wobei innerhalb des Öffnungsbereichs eine Wandung, die stromauf der ersten axialen Position den zentralen Luftkanal umgrenzt, in einem Winkel α von mehr als 20°, insbesondere von mehr als 30° oder 40°, bezüglich der Injektorlängsachse radial nach außen verläuft. Auf diese Weise weist der Öffnungsbereich ausgehend von der Austrittsöffnung des zentralen Luftkanals eine Art konische Formgebung auf. Die Wandung kann aus mehreren Abschnitten bestehen, beispielsweise unter Zwischenordnung von Austrittsöffnungen anderer Fluidkanäle, beispielsweise der Flüssigkraftstoffzufuhr. Die Wandung erstreckt sich (axial) im Bereich des zentralen Luftkanals vorzugsweise zumindest im Wesentlichen parallel zu der Injektorlängsachse und geht anschließend beispielsweise stetig oder in kleinen Winkelabstufungen in die Neigung innerhalb des Öffnungsbereiches über.

Vorzugsweise mündet der Flüssigkraftstoffkanal mit der Austrittsöffnung (bezüglich der axialen Anordnung) innerhalb des zentralen Luftkanals oder in dem Öffnungsbereich an einer zweiten axialen Position stromab der ersten axialen Position.

Vorzugsweise mündet der Gaskraftstoffkanal mit der Austrittsöffnung stromab des Flüssigkraftstoffkanals an dem stromabseitigen Ende des Injektorhauptkörpers (an der dritten axialen Position) oder stromauf des stromabseitigen Endes in den Öffnungsbereich. Auf diese Weise wird der gasförmige Kraftstoff im Betrieb vergleichsweise weit stromab der durch den zentralen Luftkanal zugeführten Luftströmung zugemischt, wodurch die Gefahr von Selbstzündung und Flammenrückschlag innerhalb des Bereiches des Injektorhauptkörpers reduziert und die Verbrennungszone in die Brennkammer hinein verlagert wird. Auf diese Weise wird die thermische Belastung der Injektoranordnung vorteilhafterweise reduziert.

Vorzugsweise mündet der äußere Luftkanal mit der Austrittsöffnung zumindest im Wesentlichen auf Höhe des stromabseitigen Endes des Injektorhauptkörpers (insbesondere entsprechend dem stromabseitigen Ende des Öffnungsbereiches) in die Brennkammer.

Besonders bevorzugt ist in dem zentralen Luftkanal ein Drallerzeuger angeordnet. In dem äußeren Luftkanal ist zugunsten eines möglichst geringen Druckverlustes vorzugsweise kein Drallerzeuger vorhanden, wobei die Strömung mittels des axial-radial verlaufenden Endabschnitts axial-radial nach außen gelenkt wird. Möglich ist auch die Anordnung eines Drallerzeugers in dem äußeren Luftkanal. Mittels des Drallerzeugers wird der Strömung ein Umfangsdrall aufgeprägt, aufgrund dessen sich die Strömung nach Austritt aus der Austrittsöffnung radial nach außen aufweitet. Die durch den zentralen Luftkanal geleitete Luftströmung wird dabei zunächst zusätzlich vorzugsweise in einem definierten Winkel von dem Öffnungsbereich radial nach außen geleitet.

Nachfolgend wird die Erfindung anhand von Ausführungsbeispielen unter Bezugnahme auf die Zeichnungen näher erläutert. Es zeigen:
- Fig. 1: eine erfindungsgemäße Injektoranordnung zum Einbringen eines gasförmigen Kraftstoffes und eines Flüssigkraftstoffes in eine Brennkammer eines Triebwerks in schematischer Darstellung in einem Längsschnitt entlang der Injektorlängsachse,
- Fig. 2: eine zweite Ausbildungsvariante der Injektoranordnung in schematischer Darstellung in einem Längsschnitt entlang der Injektorlängsachse, und
- Fig. 3: eine dritte Ausbildungsvariante der Injektoranordnung in schematischer Darstellung in einem Längsschnitt entlang der Injektorlängsachse.

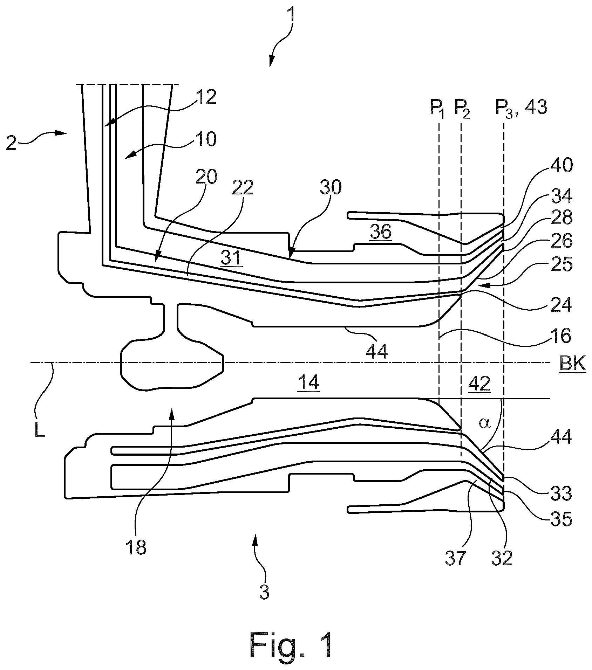

Fig. 1 zeigt in einer schematischen Darstellung im Längsschnitt eine Injektoranordnung 1 zum Einbringen von Kraftstoff und Luft in eine Brennkammer BK eines Triebwerks, insbesondere eines Flugzeugs. Die Injektoranordnung 1 weist einen Injektorschaft 2 und einen an dem Injektorschaft 2 angeordneten Injektorhauptkörper 3 auf. Der Injektorhauptkörper 3 ist entlang einer im Winkel (vorliegend im Wesentlichen rechtwinklig) zu dem Injektorschaft 2 verlaufenden Injektorlängsachse L ausgerichtet.

Die Injektoranordnung 1 ist zum Betrieb mit zwei Arten von Kraftstoffen eingerichtet, einem gasförmigen Kraftstoff und einem Flüssigkraftstoff. Dazu weist die Injektoranordnung 1 eine Flüssigkraftstoffzufuhr 20 und eine Gaskraftstoffzufuhr 30 auf. Die Kraftstoffe können sowohl zeitgleich (parallel) in einem kombinierten Betrieb als auch jeweils einzeln, in einem separaten Betrieb von flüssigem und/oder gasförmigem Kraftstoff, mittels der Injektoranordnung 1 der Brennkammer BK zugeführt werden.

Zur Kraftstoffzuleitung sind in dem Injektorschaft 2 sowohl eine Gaskraftstoff-Zuleitung 10 als auch eine Flüssigkraftstoff-Zuleitung 12 angeordnet. In Fig. 1 verlaufen die beiden Kraftstoff-Zuleitungen 10, 12 beispielhaft parallel zueinander.

Der gasförmige Kraftstoff wird insbesondere aus Wasserstoff gebildet und/oder weist Wasserstoff auf. Der Flüssigkraftstoff wird insbesondere durch Kerosin und/oder einen nachhaltigen alternativen Kraftstoff (SAF: "sustainable alternative fuel") gebildet. Das Flugzeug weist eine entsprechend eingerichtete Kraftstoffperipherie auf (in Fig. 1 nicht gezeigt).

Die Injektoranordnung 1 umfasst einen sich auf der Injektorlängsachse L erstreckenden zentralen Luftkanal 14 mit einer stromabseitigen Austrittsöffnung 16, der zur Leitung einer zentralen Luftströmung in Richtung der Brennkammer BK ausgebildet ist. Der zentrale Luftkanal 14 ist zumindest abschnittsweise zylindrisch ausgebildet und von einer im Wesentlichen parallel zu der Injektorlängsachse L verlaufenden Wandung 44 umgrenzt. Innerhalb des zentralen Luftkanals 14 ist ein Drallerzeuger 18 zur Drallaufprägung auf die im Betrieb den Luftkanal 14 durchströmende Luft angeordnet.

Der zentrale Luftkanal 14 mündet mit der Austrittsöffnung 16 an einer ersten axialen Position P1 in einen Öffnungsbereich 42, innerhalb dessen sich die Wandung 44 hier beispielhaft konisch nach außen öffnet. Die Wandung 44 kann mehrere Wandabschnitte umfassen, z. B. unterteilt durch Austrittsöffnungen anderer Kanäle. Innerhalb des Öffnungsbereichs 42 verläuft die Wandung 44 in einem Winkel α von mehr als 20°, vorzugsweise mehr als 30° oder 40°, bezüglich der Injektorlängsachse L radial nach außen. Der Öffnungsbereich 42 erstreckt sich ausgehend von der ersten axialen Position P1 bis an eine axiale Position P3 an einem stromabseitigen Ende 43 des Injektorhauptkörpers 3, wo er in die Brennkammer BK mündet. Mittels des Öffnungsbereichs 42 wird im Betrieb die aufgrund der Drallbehaftung radial nach außen strömende, zentrale Luftströmung zum Eintritt in die Brennkammer BK definiert axial-radial nach außen geleitet.

Die Flüssigkraftstoffzufuhr 20 weist zumindest einen radial unmittelbar außen (ohne Zwischenordnung eines weiteren Fluidkanals) um den zentralen Luftkanal 14 angeordneten Flüssigkraftstoffkanal 22 mit (gegebenenfalls jeweils) einer stromabseitigen Austrittsöffnung 24 zum Einbringen des Flüssigkraftstoffes in die Luftströmung und/oder in die Brennkammer BK auf. Dabei können zumindest abschnittsweise mehrere diskrete, einzelne Kraftstoffkanäle nebeneinander in ringförmiger Anordnung um den zentralen Luftkanal 14 vorhanden sein und/oder der zumindest eine Flüssigkraftstoffkanal 22 zumindest abschnittsweise als zusammenhängend umlaufender Ringkanal ausgebildet sein.

Der Flüssigkraftstoffkanal 22 weist an seinem stromabseitigen Ende vorzugsweise eine Zerstäuberanordnung 25 mit der Austrittsöffnung 24 und eine von der Luftströmung überströmbar angeordneten Filmlegerfläche 26 mit einer (bezüglich der Flüssigkraftstoffströmung) stromabseitigen Abströmkante 28 auf.

Vorliegend mündet der Flüssigkraftstoffkanal 22 stromab der ersten axialen Position P1 in dem Öffnungsbereich 42 an einer zweiten axialen Position P2. Die Filmlegerfläche 26 ist von dem stromab der Austrittsöffnung 24 angeordneten Abschnitt der Wandung 44 gebildet, wobei die Abströmkante 28 beispielhaft an der dritten axialen Position P3 angeordnet ist.

Die Gaskraftstoffzufuhr 20 weist zumindest einen radial unmittelbar außen (ohne Zwischenordnung eines weiteren Fluidkanals) um den zumindest einen Flüssigkraftstoffkanal 22 angeordneten Gaskraftstoffkanal 31 mit (gegebenenfalls jeweils) einer stromabseitigen Austrittsöffnung 34 zum Einbringen des gasförmigen Kraftstoffes in die Luftströmung und/oder in die Brennkammer BK auf. Dabei ist vorzugsweise der zumindest eine Gaskraftstoffkanal 31 zumindest abschnittsweise als zusammenhängend umlaufender Ringkanal ausgebildet.

Wie Fig. 1 zeigt, ist die Austrittsöffnung 34 des Gaskraftstoffkanals 31 möglichst weit stromab (bezüglich der durch den zentralen Gaskanal 40 zugeführten Luftströmung), jedenfalls stromab der Austrittsöffnung 24 des Flüssigkraftstoffkanals 22 angeordnet.

Auf diese Weise wird der insbesondere hochreaktive, gasförmige Kraftstoff möglichst weit stromab der Luftströmung zugegeben, sodass einem frühen Zünden (innerhalb der Injektoranordnung) und/oder Flammenrückschlag vorgebeugt wird.

Für eine vorteilhafte, emissionsoptimierende Strömungsführung weist der Gaskraftstoffkanal 31 an seinem stromabseitigen Ende einen axial-radial nach außen ausgerichteten Endabschnitt 32 auf, mittels dessen der in die Brennkammer BK einströmenden Gasströmung ein Richtungsimpuls radial nach außen aufgeprägt wird. Der Winkel kann z. B. etwas (z. B. um bis zu 5° oder 10°) geringer ausgebildet sein als der Winkel α, oder im Wesentlichen dem Winkel α entsprechen. Durch den Richtungsimpuls nach außen kann das Einmischen des gasförmigen Kraftstoffes in die Luftströmung etwas verzögert werden, wodurch die Flammenzone weiter von dem Injektorhauptkörper 3 beabstandet und somit die thermische Belastung des Injektors reduziert wird.

Radial unmittelbar (ohne Zwischenordnung eines weiteren Fluidkanals) außen um den Gaskraftstoffkanal 31 umfasst der Injektorhauptkörper 3 einen, vorzugsweise ringförmig umlaufenden äußeren Luftkanal 36 mit einer stromabseitigen Austrittsöffnung 40 zur Leitung einer äußeren Luftströmung vorzugsweise unmittelbar (ohne Durchströmung des Öffnungsbereiches 42) in die Brennkammer BK. Dabei ist die Austrittsöffnung 40 vorzugsweise an der axialen Position P3 unmittelbar an der Brennkammer BK, an dem stromabseitigen Ende des Öffnungsbereichs 42, positioniert. Innerhalb des äußeren Luftkanals 36 ist vorzugsweise kein Drallerzeuger angeordnet.

Der äußere Luftkanal 36 weist an seinem stromabseitigen Ende einen radial nach außen gerichteten Endabschnitt 37 auf, mittels dessen der in die Brennkammer BK einströmenden, äußeren Luftströmung ein Richtungsimpuls radial nach außen aufgeprägt wird. Der Winkel kann z. B. etwas (z. B. um bis zu 5° oder 10°) geringer ausgebildet sein als der Winkel α oder im Wesentlichen dem Winkel α entsprechen.

Vorzugsweise sind sowohl der äußere Luftkanal 36 als auch die Gaskraftstoffzufuhr 30 mit dem Gaskraftstoffkanal 31 zur Zufuhr des jeweils zugeführten Gases (Luft oder gasförmiger Kraftstoff) in die Brennkammer BK (bzw. in den Öffnungsbereich 42) mit hoher Geschwindigkeit ausgebildet. Die Geschwindigkeit kann z. B. zwischen 50 m/s und 150 m/s, insbesondere zwischen 80 m/s und 100 m/s betragen. Bei dem gasförmigen Kraftstoff kann die Geschwindigkeit auch höher sein, beispielsweise bis zu 300 m/s. Dabei sind insbesondere die Strömungsquerschnitte unter Berücksichtigung der Betriebszustände, für welche die Injektoranordnung 1 ausgelegt ist, entsprechend angepasst. Auf diese Weise kann die Verbrennungszone im Betrieb mit dem hochreaktiven gasförmigen Kraftstoff von der Injektoranordnung 1 stromab verlagert und somit die thermische Belastung der Injektoranordnung 1 verringert werden. Auch wird bei Zugabe des gasförmigen Kraftstoffes innerhalb der Injektoranordnung 1 (stromauf der dritten axialen Position P3) einem Flammenrückschlag in die Injektoranordnung 1 vorgebeugt.

Der Gaskraftstoffkanal 31 ist auf der radialen Innenseite von einer Wandung 33 und auf der radialen Außenseite von einer Wandung 35 begrenzt, die zumindest an ihren jeweiligen stromabseitigen Enden möglichst dünnwandig (insbesondere maximal so dick wie für die mechanische Stabilität erforderlich) ausgebildet sind. So wird im Betrieb eine Strömungsseparation zwischen der Luftströmung und der Strömung des gasförmigen Kraftstoffes einhergehend mit Zonen geringer Strömungsgeschwindigkeit vermieden, die zu einer unerwünschten Stabilisierung einer Flamme an der Injektoranordnung 1 führen können.

Für eine fertigungstechnisch günstige, betriebssichere und zugleich emissionsoptimierte Ausbildung der Injektoranordnung 1 sind somit zwischen dem zentralen Luftkanal 14 und dem äußeren Luftkanal 36 lediglich der zumindest eine Flüssigkraftstoffkanal 22 (oder mehrere Kanäle insbesondere auf einer einheitlichen radialen Position) und der zumindest eine Gaskraftstoffkanal 31 (oder mehrere Kanäle insbesondere auf einer einheitlichen radialen Position) vorhanden, sowie ausschließlich die beiden Luftkanäle, der zentrale Luftkanal 14 und der äußere Luftkanal 36.

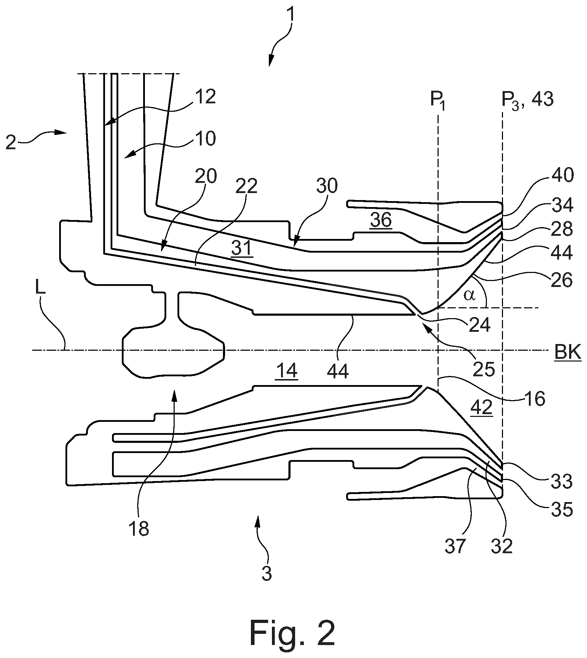

Fig. 2 zeigt eine zweite Ausbildungsvariante der Injektoranordnung 1, wobei die Austrittsöffnung 24 des Flüssigkraftstoffkanals 22 innerhalb des zentralen Luftkanals 14, stromauf der axialen Position P1, angeordnet ist. Die übrige Ausgestaltung der in Fig. 2 gezeigten Injektoranordnung 1 entspricht der in Fig. 1 gezeigten Ausbildung.

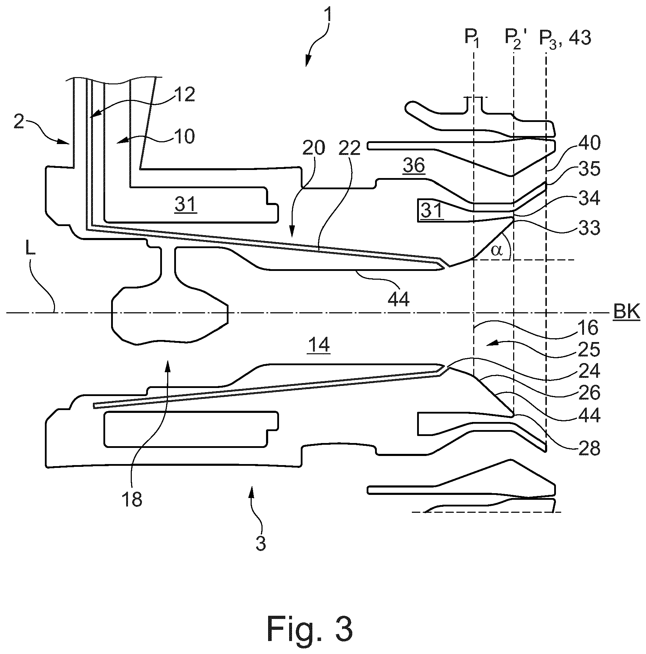

Fig. 3 zeigt eine dritte Ausbildungsvariante der Injektoranordnung 1, wobei die den Gaskraftstoffkanal 31 auf der radialen Innenseite begrenzende Wandung 33 stromabseitig axial zurückversetzt gegenüber der den Gaskraftstoffkanal 31 auf der radialen Außenseite begrenzenden Wandung 35 endet. Durch die axial-radial nach außen gerichtete Ausrichtung der Wandung 35 und den Impuls der axial-radial durch den Öffnungsbereich 42 strömenden Luftströmung wird im Betrieb die Gaskraftstoff-Strömung weiterhin definiert axial-radial nach außen geführt. Auf diese Weise mündet der Gaskraftstoffkanal 31 an einer axialen Position P2', stromauf der dritten axialen Position P3, innerhalb des Öffnungsbereiches 42. Diese Ausbildungsvariante geht insbesondere mit fertigungstechnischen Vorteilen einher.

### Bezugszeichenliste

- 1: Injektoranordnung
- 2: Injektorschaft
- 3: Injektorhauptkörper
- 10: Gaskraftstoff-Zuleitung
- 12: Flüssigkraftstoff-Zuleitung
- 14: zentraler Luftkanal
- 16: Austrittsöffnung
- 18: Drallerzeuger
- 20: Flüssigkraftstoffzufuhr
- 22: Flüssigkraftstoffkanal
- 24: Austrittsöffnung
- 25: Zerstäuberanordnung
- 26: Filmlegerfläche
- 28: Abströmkante
- 30: Gaskraftstoffzuhr
- 31: Gaskraftstoffkanal
- 32: Endabschnitt
- 33: Wandung
- 34: Austrittsöffnung
- 35: Wandung
- 36: äußerer Luftkanal
- 37: Endabschnitt
- 40: Austrittsöffnung
- 42: Öffnungsbereich
- 43: stromabseitiges Ende
- 44: Wandung
- BK: Brennkammer
- L: Injektor-Längsachse
- α: Winkel
- P1: Erste Position
- P2, P2': Zweite Position
- P3: Dritte Position

## Patentansprüche

1. Injektoranordnung (1) für ein Triebwerk, insbesondere eines Flugzeugs, zum Einbringen eines gasförmigen Kraftstoffes und eines Flüssigkraftstoffes sowie Luft in eine Brennkammer (BK), mit einem Injektorschaft (2) und einem entlang einer Injektorlängsachse (L) ausgerichteten Injektorhauptkörper (3), wobei der Injektorhauptkörper (3) umfasst:
- einen auf der Injektorlängsachse (L) angeordneten zentralen Luftkanal (14) mit einer Austrittsöffnung (16) zur Leitung einer zentralen Luftströmung,
- einen radial außen um den zentralen Luftkanal (14) umlaufend angeordneten äußeren Luftkanal (36) mit einer Austrittsöffnung (40) zur Leitung einer äußeren Luftströmung,
- eine radial zwischen dem zentralen Luftkanal (14) und dem äußeren Luftkanal (36) angeordnete Flüssigkraftstoffzufuhr (20) mit zumindest einem Flüssigkraftstoffkanal (22) und einer Austrittsöffnung (24) zum Einbringen des Flüssigkraftstoffes, und
- eine radial zwischen der Flüssigkraftstoffzufuhr (20) und dem äußeren Luftkanal (36) angeordnete Gaskraftstoffzufuhr (30) mit zumindest einem Gaskraftstoffkanal (31) und einer Austrittsöffnung (34) zum Einbringen des gasförmigen Kraftstoffes,
wobei der äußere Luftkanal (36) an seinem stromabseitigen Ende einen radial nach außen ausgerichteten Endabschnitt (37) zur Leitung des in die Brennkammer (BK) einströmenden äußeren Luftstromes radial nach außen aufweist,
**dadurch gekennzeichnet,**
**dass** zwischen dem zentralen Luftkanal (14) und dem äußeren Luftkanal (36) ausschließlich der Gaskraftstoffkanal (31) und der Flüssigkraftstoffkanal (22) als Fluidkanäle angeordnet sind.

2. Injektoranordnung (1) nach Anspruch 1,
**dadurch gekennzeichnet,**
**dass** der äußere Luftkanal (36) ringförmig umlaufend um die Injektorlängsachse (L) ausgebildet ist.

3. Injektoranordnung (1) nach Anspruch 1 oder 2,
**dadurch gekennzeichnet,**
**dass** die Gaskraftstoffzufuhr (30) an ihrem stromabseitigen Ende einen radial nach außen ausgerichteten Endabschnitt (32) zur Leitung des in die Brennkammer (BK) einströmenden Gases radial nach außen aufweist.

4. Injektoranordnung (1) nach einem der vorhergehenden Ansprüche,
**dadurch gekennzeichnet,**
**dass** der äußere Luftkanal (36) zur Zufuhr des äußeren Luftstroms in die Brennkammer (BK) mit hoher Geschwindigkeit, zwischen 50 m/s und 150 m/s, insbesondere zwischen 80 m/s und 100 m/s, ausgebildet ist.

5. Injektoranordnung (1) nach einem der vorhergehenden Ansprüche,
**dadurch gekennzeichnet,**
**dass** die Gaskraftstoffzufuhr (30) zur Zufuhr des gasförmigen Kraftstoffes in die Brennkammer (BK) mit hoher Geschwindigkeit, zwischen 50 m/s und 150 m/s, insbesondere zwischen 80 m/s und 100 m/s, ausgebildet ist.

6. Injektoranordnung (1) nach einem der vorhergehenden Ansprüche,
**dadurch gekennzeichnet,**
**dass** die Austrittsöffnung (34) der Gaskraftstoffzufuhr (30) und/oder die Austrittsöffnung (24) der Flüssigkraftstoffzufuhr (20) ringförmig umlaufend ausgebildet ist/sind.

7. Injektoranordnung nach einem der vorhergehenden Ansprüche,
**dadurch gekennzeichnet,**
**dass** eine den Gaskraftstoffkanal (31) auf der radialen Innenseite begrenzende Wandung (33) axial zurückversetzt gegenüber einer den Gaskraftstoffkanal (31) auf der radialen Außenseite begrenzenden Wandung (35) endet.

8. Injektoranordnung (1) nach einem der vorhergehenden Ansprüche,
**dadurch gekennzeichnet,**
**dass** der Flüssigkraftstoffkanal (22) an seinem stromabseitigen Ende eine Zerstäuberanordnung (25) mit der Austrittsöffnung (24) und einer Filmlegerfläche (26) aufweist.

9. Injektoranordnung (1) nach einem der vorhergehenden Ansprüche, **dadurch gekennzeichnet,**
**dass** der zentrale Luftkanal (14) an einer ersten axialen Position (P1) an einem stromabseitigen Öffnungsbereich (42) des Injektorhauptkörpers (3) mündet, wobei sich der Öffnungsbereich (42) von der ersten axialen Position (P1) vorzugsweise bis an ein stromabseitiges Ende (43) des Injektorhauptkörpers (3) erstreckt, und
wobei innerhalb des Öffnungsbereichs (42) eine Wandung, die stromauf der ersten axialen Position (E1) den zentralen Luftkanal (14) umgrenzt, in einem Winkel (α) von mehr als 20°, insbesondere von mehr als 30° oder 40°, bezüglich der Injektorlängsachse (L) radial nach außen verläuft.

10. Injektoranordnung (1) nach einem der vorhergehenden Ansprüche,
**dadurch gekennzeichnet,**
**dass** der Flüssigkraftstoffkanal (22) mit der Austrittsöffnung (24) innerhalb des zentralen Luftkanals (14) oder in dem Öffnungsbereich (42) an einer zweiten axialen Position (P2) stromab der ersten axialen Position (P1), mündet.

11. Injektoranordnung (1) nach einem der vorhergehenden Ansprüche,
**dadurch gekennzeichnet,**
**dass** der Gaskraftstoffkanal (31) mit der Austrittsöffnung (34) stromab des Flüssigkraftstoffkanals (22) an dem stromabseitigen Ende (43) des Injektorhauptkörpers (3) oder stromauf des stromabseitigen Endes (43) in den Öffnungsbereich (42) mündet.

12. Injektoranordnung (1) nach einem der vorhergehenden Ansprüche,
**dadurch gekennzeichnet,**
**dass** der äußere Luftkanal (36) mit der Austrittsöffnung (40) zumindest im Wesentlichen auf Höhe des stromabseitigen Endes (43) des Injektorhauptkörpers (3) in die Brennkammer (BK) mündet.

13. Injektoranordnung (1) nach einem der vorhergehenden Ansprüche,
**dadurch gekennzeichnet,**
**dass** in dem zentralen Luftkanal (14) ein Drallerzeuger (18) angeordnet ist.

14. Flugzeug mit einer Injektoranordnung (1) nach einem der vorhergehenden Ansprüche und mit einer Treibstoffperipherie, die zum Betrieb des Flugzeugs mit einem gasförmigen Kraftstoff und mit einem Flüssigkraftstoff ausgebildet ist.

## Claims

1. Injector assembly (1) for an engine, in particular an aircraft, for introducing a gaseous fuel and a liquid fuel as well as air into a combustion chamber (BK), having an injector shaft (2) and an injector main body (3) aligned along an injector longitudinal axis (L), wherein the injector main body (3) comprises:
- a central air duct (14), arranged on the injector longitudinal axis (L) with an outlet opening (16) for guiding a central air flow,
- an outer air duct (36) running radially outwards around the central air duct (14) with an outlet opening (40) for guiding an outer air flow,
- a liquid fuel supply (20) arranged radially between the central air duct (14) and the outer air duct (36) with at least one liquid fuel duct (22) and an outlet opening (24) for introducing the liquid fuel, and
- a gas fuel supply (30) arranged radially between the liquid fuel supply (20) and the outer air duct (36) with at least one gas fuel duct (31) and an outlet opening (34) for introducing the gaseous fuel,
wherein the outer air duct (36) has at its downstream end a radially outwardly oriented end section (37) for guiding the outer air flow flowing into the combustion chamber (BK) radially outwards, **characterised in that**
only the gas fuel duct (31) and the liquid fuel duct (22) are arranged as fluid ducts between the central air duct (14) and the outer air duct (36).

2. Injector assembly (1) according to claim 1,
**characterised in that**
the outer air duct (36) is designed annularly circumferentially about the injector longitudinal axis (L).

3. Injector assembly (1) according to claim 1 or 2,
**characterised in that**
the gas fuel supply (30) has at its downstream end a radially outwardly oriented end section (32) for guiding the gas flowing into the combustion chamber (BK) radially outwards.

4. Injector assembly (1) according to any of the preceding claims,
**characterised in that**
the outer air duct (36) is designed to supply the outer air flow into the combustion chamber (BK) at high speed, between 50 m/s and 150 m/s, in particular between 80 m/s and 100 m/s.

5. Injector assembly (1) according to any of the preceding claims,
**characterised in that**
the gas fuel supply (30) is designed to supply the gaseous fuel into the combustion chamber (BK) at high speed, between 50 m/s and 150 m/s, in particular between 80 m/s and 100 m/s.

6. Injector assembly (1) according to any of the preceding claims,
**characterised in that**
the outlet opening (34) of the gas fuel supply (30) and/or the outlet opening (24) of the liquid fuel supply (20) is/are designed annularly circumferentially.

7. Injector assembly according to any of the preceding claims,
**characterised in that**
a wall (33) delimiting the gas fuel duct (31) on the radial inner side ends axially set back with respect to a wall (35) delimiting the gas fuel duct (31) on the radial outer side.

8. Injector assembly (1) according to any of the preceding claims,
**characterised in that**
the liquid fuel duct (22) has, at its downstream end, an atomiser assembly (25) with the outlet opening (24) and a film applicator surface (26).

9. Injector assembly (1) according to any of the preceding claims,
**characterised in that**
the central air duct (14) opens at a first axial position (P1) at a downstream opening region (42) of the injector main body (3),
wherein the opening region (42) preferably extends from the first axial position (P1) to a downstream end (43) of the injector main body (3), and
wherein, within the opening region (42), a wall, which, upstream of the first axial position (E1), delimits the central air duct (14), runs radially outwards at an angle (α) of more than 20°, in particular of more than 30° or 40°, with respect to the injector longitudinal axis (L).

10. Injector assembly (1) according to any of the preceding claims,
**characterised in that**
the liquid fuel duct (22) opens with the outlet opening (24) within the central air duct (14) or in the opening region (42) at a second axial position (P2) downstream of the first axial position (P1).

11. Injector assembly (1) according to any of the preceding claims,
**characterised in that**
the gas fuel duct (31) opens into the opening region (42) with the outlet opening (34) downstream of the liquid fuel duct (22) at the downstream end (43) of the injector main body (3) or upstream of the downstream end (43).

12. Injector assembly (1) according to any of the preceding claims,
**characterised in that**
the outer air duct (36) opens into the combustion chamber (BK) with the outlet opening (40) at least substantially at the level of the downstream end (43) of the injector main body (3).

13. Injector assembly (1) according to any of the preceding claims,
**characterised in that**
a swirl generator (18) is arranged in the central air duct (14).

14. Aircraft with an injector assembly (1) according to any of the preceding claims and with a fuel periphery designed to operate the aircraft with a gaseous fuel and with a liquid fuel.

## Revendications

1. Ensemble injecteur (1) pour un moteur, en particulier d'un aéronef, destiné à introduire un carburant gazeux, un carburant liquide ainsi que de l'air dans une chambre de combustion (BK), avec une tige d'injecteur (2) et un corps principal d'injecteur (3) orienté selon l'axe longitudinal d'injecteur (L), le corps principal d'injecteur (3) comprenant :
- un canal d'air central (14) disposé sur l'axe longitudinal d'injecteur (L) et présentant un orifice de sortie (16) destiné à conduire un flux d'air central,
- un canal d'air extérieur (36) disposé radialement à l'extérieur du canal d'air central (14) et s'étendant autour de celui-ci, avec un orifice de sortie (40) destiné à conduire un flux d'air extérieur,
- une alimentation en carburant liquide (20) disposée radialement entre le canal d'air central (14) et le canal d'air extérieur (36) avec au moins un canal de carburant liquide (22) et un orifice de sortie (24) destiné à introduire le carburant liquide, et
- une alimentation en carburant gazeux (30) disposée radialement entre l'alimentation en carburant liquide (20) et le canal d'air extérieur (36) avec au moins un canal de carburant gazeux (31) et une ouverture de sortie (34) destinée à introduire le carburant gazeux,
dans lequel le canal d'air extérieur (36) présente à son extrémité aval une section d'extrémité (37) orientée radialement vers l'extérieur et destinée à conduire radialement vers l'extérieur le flux d'air extérieur entrant dans la chambre de combustion (BK), **caractérisé en ce**
**que** seuls le canal de carburant gazeux (31) et le canal de carburant liquide (22) sont disposés en tant que canaux de fluide entre le canal d'air central (14) et le canal d'air extérieur (36).

2. Ensemble injecteur (1) selon la revendication 1, **caractérisé en ce que** le canal d'air extérieur (36) est réalisé sous forme annulaire autour de l'axe longitudinal d'injecteur (L).

3. Ensemble injecteur (1) selon l'une des revendications 1 ou 2, **caractérisé en ce que** l'alimentation en carburant gazeux (30) présente à son extrémité aval une section d'extrémité (32) orientée radialement vers l'extérieur et destinée à conduire radialement vers l'extérieur le gaz entrant dans la chambre de combustion (BK).

4. Ensemble injecteur (1) selon l'une quelconque des revendications précédentes, **caractérisé en ce**
**que** le canal d'air extérieur (36) est conçu pour l'acheminement du flux d'air extérieur dans la chambre de combustion (BK) à grande vitesse, entre 50 m/s et 150 m/s, en particulier entre 80 m/s et 100 m/s.

5. Ensemble injecteur (1) selon l'une quelconque des revendications précédentes, **caractérisé en ce que** l'alimentation en carburant gazeux (30) est conçue pour l'acheminement du carburant gazeux dans la chambre de combustion (BK) à grande vitesse, entre 50 m/s et 150 m/s, en particulier entre 80 m/s et 100 m/s.

6. Ensemble injecteur (1) selon l'une quelconque des revendications précédentes, **caractérisé en ce**
**que** l'orifice de sortie (34) de l'alimentation en carburant gazeux (30) et/ou l'orifice de sortie (24) de l'alimentation en carburant liquide (20) sont réalisés sous forme annulaire sur toute la circonférence.

7. Ensemble injecteur selon l'une quelconque des revendications précédentes,
**caractérisé en ce**
**qu'**une paroi (33) délimitant le canal de carburant gazeux (31) sur la face interne radiale se termine en retrait axialement par rapport à une paroi (35) délimitant le canal de carburant gazeux (31) sur la face externe radiale.

8. Ensemble injecteur (1) selon l'une quelconque des revendications précédentes, **caractérisé en ce**
**que** le canal de carburant liquide (22) présente à son extrémité aval un dispositif de pulvérisation (25) avec l'orifice de sortie (24) et une surface de formation de film (26).

9. Ensemble injecteur (1) selon l'une quelconque des revendications précédentes, **caractérisé en ce**
**que** le canal d'air central (14) débouche, à une première position axiale (P1), sur une zone d'ouverture aval (42) du corps principal d'injecteur (3), la zone d'ouverture (42) s'étendant de préférence depuis ladite première position axiale (P1) jusqu'à une extrémité aval (43) du corps principal d'injecteur (3), et
dans lequel, à l'intérieur de la zone d'ouverture (42), une paroi qui délimite, en amont de la première position axiale (E1), le canal d'air central (14) s'étend radialement vers l'extérieur selon un angle (α) supérieur à 20°, en particulier supérieur à 30° ou 40°, par rapport à l'axe longitudinal d'injecteur (L).

10. Ensemble injecteur (1) selon l'une quelconque des revendications précédentes, **caractérisé en ce**
**que** le canal de carburant liquide (22), avec l'orifice de sortie (24), débouche à l'intérieur du canal d'air central (14) ou dans la zone d'ouverture (42) à une seconde position axiale (P2) située en aval de la première position axiale (P1).

11. Ensemble injecteur (1) selon l'une quelconque des revendications précédentes, **caractérisé en ce**
**que** le canal de carburant gazeux (31), avec l'orifice de sortie (34), débouche dans la zone d'ouverture (42) en aval du canal de carburant liquide (22) au niveau de l'extrémité aval (43) du corps principal d'injecteur (3) ou en amont de l'extrémité aval (43).

12. Ensemble injecteur (1) selon l'une quelconque des revendications précédentes, **caractérisé en ce**
**que** le canal d'air extérieur (36), avec l'orifice de sortie (40), débouche dans la chambre de combustion (BK) au moins sensiblement à la hauteur de l'extrémité aval (43) du corps principal d'injecteur (3).

13. Ensemble injecteur (1) selon l'une quelconque des revendications précédentes, **caractérisé en ce**
**qu'**un générateur de tourbillon (18) est disposé dans le canal d'air central (14).

14. Aéronef présentant un ensemble injecteur (1) selon l'une quelconque des revendications précédentes et un système périphérique de carburant conçu pour faire fonctionner l'aéronef avec un carburant gazeux et un carburant liquide.
